# EUROPEAN PATENT APPLICATION

(11) **EP 2 202 917 A1**
(43) Date of publication of application: **30.06.2010**
(21) Application number: 09177953.8
(22) Date of filing: 03.12.2009
(51) Int. Cl.: H04L 12/24, H04L 12/56

(54) **Path switching method, communication system, communication device and program**

(30) Priority: 26.12.2008 JP 2008331898
(71) Applicant: Nec Corporation, Tokyo 108-8001 (JP)
(72) Inventor: Matsumoto, Takehiko, Tokyo 108-8001 (JP)
(74) Representative: MacDougall, Alan John Shaw

(57) **Abstract**

When switching every path which uses as a relay point a communication device including a removal target resource, to another path having a route not passing through the removal target resource, a maintenance person transmits a removal preparation request specifying the removal target resource to the relay point communication device. Upon receiving the removal preparation request, the communication device detects a path identifier and a start point communication device of each path passing through the removal target resource, and transmits a path switching request specifying the path identifier and the removal target resource, to the start point communication device. Upon receiving the path switching request, the communication device computes a route of another path not passing through the removal target resource and having the same start point and end point as those of the identified path, and after setting the other path having the computed route, disconnects the identified path.

## Description

### INCORPORATION BY REFERENCE

This application is based upon and claims the benefit of priority from Japanese patent application No. 2008-331898, filed on December 26, 2008, the disclosure of which is incorporated herein in its entirety by reference.

### TECHNICAL FIELD

The present invention relates to a path switching technique enabling, in a network capable of setting and disconnecting paths in an autonomous distributed manner, switching of every path passing through a communication device to be removed, to another path.

### BACKGROUND ART

Networks having an autonomous distributed control function capable of setting and disconnecting (releasing) paths in an autonomous distributed manner (networks supporting autonomous distributed control), including GMPLS (Generalized Multi-Protocol Label Switching)/ASON (Automatically Switched Optical Network), have been proposed (refer to JP 2006-319758 A (Patent Document 1), for example). In such a network supporting autonomous distributed control, setting and disconnecting of a path is performed as shown below.

When setting a path, a maintenance person inputs, to a communication device serving as a start point of the path (start point communication device), a device ID of the start point communication device, a device ID of a communication device serving as an end point of the path (end point communication device), and a path ID. When this information has been input, the start point communication device transmits a path setting request to the end point communication device. The path setting request includes the device ID of the start point communication device, the device ID of the end point communication device, and the path ID. The path setting request may also include route information.

When an adjacent communication device receives the path setting request from the start point communication device, the adjacent communication device transmits the path setting request to another adjacent communication device other than the source of the path setting request. It should be noted that if the path setting request includes route information, the adjacent communication device determines a destination communication device in accordance with the route information, and if the path setting request does not include route information, the adjacent communication device determines a destination communication device using topology information held by the self device. These transfer processes are repeated until the path setting request reaches the end point communication device.

Upon receiving the path setting request, the end point communication device transmits a reply with respect to the path setting request in a route opposite the route through which the path setting request has been transmitted. This reply includes the device ID of the start point communication device, the device ID of the end point communication device, the path ID, and a label (a fixed length label attached to the packet, a time slot, a wavelength, etc.). Upon receiving the reply, an adjacent communication device performs label reservation, switch settings, and the like, and transfers the reply to another adjacent communication device other than the one which has transmitted the reply. These transfer processes are repeated until the reply to the path setting request reaches the start point communication device. Thereby, a path requested by the path setting request is set between the start point communication device and the end point communication device.

When disconnecting (releasing) the set path, the maintenance person inputs, to the start point communication device of the path, the device ID of the start point communication device, the device ID of the end point communication device, and the path ID of the path to be disconnected. Thereby, a path disconnecting request is transmitted from the start point communication device to the end point communication device. The path disconnecting request includes the device ID of the start point communication device, the device ID of the end point communication device, and the path ID of the path to be disconnected. The path disconnecting request transmitted from the start point communication device is sequentially transferred from communication devices existing in the upstream on the path identified by the path ID toward communication devices existing in the downstream of the path. When each of the communication devices receives the path disconnecting request, the device performs a path disconnection process identified by the path ID included in the request.

In communication networks, there is a case where resources through which paths can pass through such as communication devices, communication links, and interfaces to which communication links are connected, must be removed due to maintenance, construction, or the like during operation. If a resource where a path passes through is removed, the path cannot be used any more. As such, before removing the resource, a maintenance person sorts out all paths passing through the resource to be removed, and sets a path to be switched for each of the paths by means of the above-described method, and then switches a signal from the source path to a destination path and disconnects (releases) the source path.

[Patent Document 1] Japanese Patent Unexamined Publication No. 2006-319758

As described above, when a resource such as a communication device is to be removed during operation due to maintenance, construction, or the like, it has been necessary for a maintenance person to sort out all paths passing through the resource to be removed before removal. Further, for each of the paths, the maintenance person has to set a path to be switched by inputting the device IDs of the start point communication device and the end point communication device and the path ID to the start point communication device of the path and then disconnect (release) the source path. This operation takes time for the maintenance person. In particular, if a large number of paths pass through the resource to be released, a large burden is placed on the maintenance person and it takes long time for completing switching of all paths.

### SUMMARY

An exemplary embodiment of the invention provides a path switching method, a communication system, a communication device, and a program, capable of solving problems that burden a maintenance person when all paths passing through a resource to be removed are switched to other paths not passing through the resource, and that require a long time to complete switching of all of the paths.

A path switching method according to an exemplary aspect of the present invention is a method of switching every path using as a relay point a communication device including a removal target resource, among one or more paths set between communication devices, to another path having a route not passing through the removal target resource. The method includes transmitting a removal preparation request specifying the removal target resource from an outside request source to the communication device serving as the relay point, detecting, by the communication device receiving the removal preparation request, a path identifier and a communication device serving as a start point of each path passing through the removal target resource, and for each detected path, transmitting a path switching request specifying the path identifier of the detected path and the removal target resource to the communication device serving as the start point of the path, and computing, by the communication device receiving the path switching request, a route of another path not passing through the removal target resource and having a start point and an end point which are the same as those of the path identified by the path identifier, and after performing a setting process of the other path having the computed route, performing a disconnecting process of the path identified by the path identifier.

A communication system according to another exemplary aspect of the present invention is a system including a plurality of communication devices and at least one link connecting the communication devices. A communication device serving as a relay point of a path includes a resource removal processing means for, when receiving from an outside request source a removal preparation request specifying a removal target resource existing in the communication device itself, detecting a path identifier and a communication device serving as a start point of each of the paths passing through the removal target resource, and for each detected path, transmitting a path switching request specifying the detected path identifier of the path and the removal target resource to the communication device serving as the start point of the path. The communication device serving as the start point of the path includes a routing processing means for, when receiving the path switching request specifying the path identifier and the removal target resource, computing a route of another path having a start point and an end point which are the same as those of the path identified by the path identifier and not passing through the removal target resource, and a path switching processing means for, after performing a setting process of the other path computed by the routing processing unit, performing a disconnecting process of the path identified by the path identifier.

A communication device according to another exemplary aspect of the present invention includes a resource removal processing means for, when receiving from an outside request source a removal preparation request specifying a removal target resource existing in the communication device itself, detecting a path identifier and a communication device serving as a start point of each of the paths passing through the removal target resource, and for each detected path, transmitting a path switching request specifying the detected path identifier of the path and the removal target resource to the communication device serving as the start point of the path, a routing processing means for, when receiving the path switching request specifying the path identifier and the removal target resource, computing a route of another path having a start point and an end point which are the same as those of the path identified by the path identifier and not passing through the removal target resource, and a path switching processing means for, after performing a setting process of the other path computed by the routing processing unit, performing a disconnecting process of the path identified by the path identifier.

A program according to another exemplary aspect of the present invention includes computer implementable instructions to cause a computer to function as: a resource removal processing unit which, when receiving from an outside request source a removal preparation request specifying a removal target resource existing in the communication device itself, detects a path identifier and a communication device serving as a start point of each of the paths passing through the removal target resource, and for each detected path, transmits a path switching request specifying the detected path identifier of the path and the removal target resource to the communication device serving as the start point of the path, a routing processing unit which, when receiving the path switching request specifying the path identifier and the removal target resource, computes a route of another path having a start point and an end point which are the same as those of the path identified by the path identifier and not passing through the removal target resource, and a path switching processing unit which, after performing a setting process of the other path computed by the routing processing unit, performs a disconnecting process of the path identified by the path identifier.

As the present invention is configured as described above, the workload of the maintenance person when switching every path passing through a removal target resource to another path not passing through the removal target resource can be reduced significantly, and the time required for completing switching for all paths can also be reduced significantly.

### BRIEF DESCRIPTION OF THE DRAWINGS

Fig. 1 shows an exemplary network to which a first exemplary embodiment of the present invention is applied;
Fig. 2 is a block diagram showing an exemplary configuration of a second exemplary embodiment of the present invention;
Fig. 3 shows legend and the like of Fig. 2;
Fig. 4 is a functional block diagram showing a communication device of the present invention;
Fig. 5 shows an exemplary network before a communication device is removed in the second exemplary embodiment of the present invention;
Fig. 6 is a flowchart showing exemplary processes of removing the communication device in the second exemplary embodiment of the present invention;
Fig. 7 is sequence chart showing exchanges of messages when the communication device is removed in the second exemplary embodiment of the present invention;
Fig. 8 shows exemplary contents of a path information table used in the second exemplary embodiment of the present invention;
Fig. 9 shows the network after the communication device has been removed in the second exemplary embodiment of the present invention;
Fig. 10 shows an exemplary network before a communication link is removed in a third exemplary embodiment of the present invention;
Fig. 11 shows exemplary contents of a path information table used in the third exemplary embodiment of the present invention;
Fig. 12 shows an exemplary network before an interface connected with a communication link is removed, in a fourth exemplary embodiment of the present invention;
Fig. 13 shows exemplary contents of a path information table used in the fourth exemplary embodiment of the present invention; and
Fig. 14 shows an exemplary network before a resource is removed in a fifth exemplary embodiment of the present invention.

### EXEMPLARY EMBODIMENT

### [First Exemplary Embodiment]

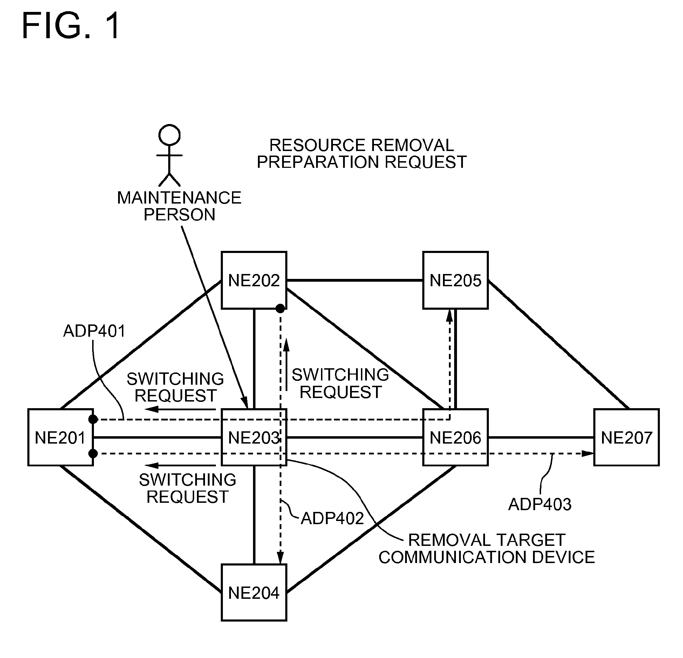

A first exemplary embodiment of the present invention will be described with reference to Fig. 1. The network shown in Fig. 1 is a network supporting autonomous distributed control, including communication devices NE201 to NE207, each having an autonomous distributed control function, and links connecting the communication devices. In the network, three paths are set, namely, a path ADP 401 in which the communication device NE201 is a start point, the communication device NE205 is an end point, and the communication devices NE203 and NE206 are relay points; and a path ADP402 in which the communication device NE202 is a start point, the communication device NE204 is an end point, and the communication device NE203 is a relay point; and a path ADP403 in which the communication device NE201 is a start point, the communication device NE207 is an end point, and the communication devices NE203 and NE206 are relay points.

In such a network, when a communication device (e.g., the communication device NE203) is to be removed, a maintenance person inputs a removal preparation request identifying the self communication device NE203 as a removal target resource, to the removal target communication device NE203. Thereby, the removal target communication device NE203 retrieves all paths set in the self device NE203. In the example of FIG. l, three paths ADP401 to ADP403 are retrieved.

Then, the removal target communication device NE203 transmits, for each of the paths, a switching request including the path ID of the retrieved path, the device ID of the start point communication device, the device ID of the end point communication device, and the device ID of the removal target communication device NE203 (the device ID of the communication device in which passage of a path is to be prohibited), to the start point communication device of the path. For example, regarding the path ADP401, a switching request including the device ID of the start point communication device NE201, the device ID of the end point communication device NE205, the path ID of the path ADP401, and the device ID of the removal target communication device NE203, is transmitted to the start point communication device NE201. Thereby, the start point communication device NE201 first sets a switching destination path of a route in which the communication device NE201 is the start point, the communication device NE205 is the end point, and the removal target communication device NE203 is not passed. Then, the start point communication device NE201 switches a signal from the source path to the destination path, and disconnects the source path ADP401. It should be noted that the same path switching process is performed to the other paths ADP402 and ADP 403.

As described above, when the communication device NE203 is to be removed, the only process that a maintenance person should be taken is to input a communication device removal preparation request to the removal target communication device NE203. This enables to significantly reduce the workload and the work hours of the maintenance person.

### [Second Exemplary Embodiment]

Next, a second exemplary embodiment of the present invention will be described in detail. The second exemplary embodiment describes the first exemplary embodiment more specifically.

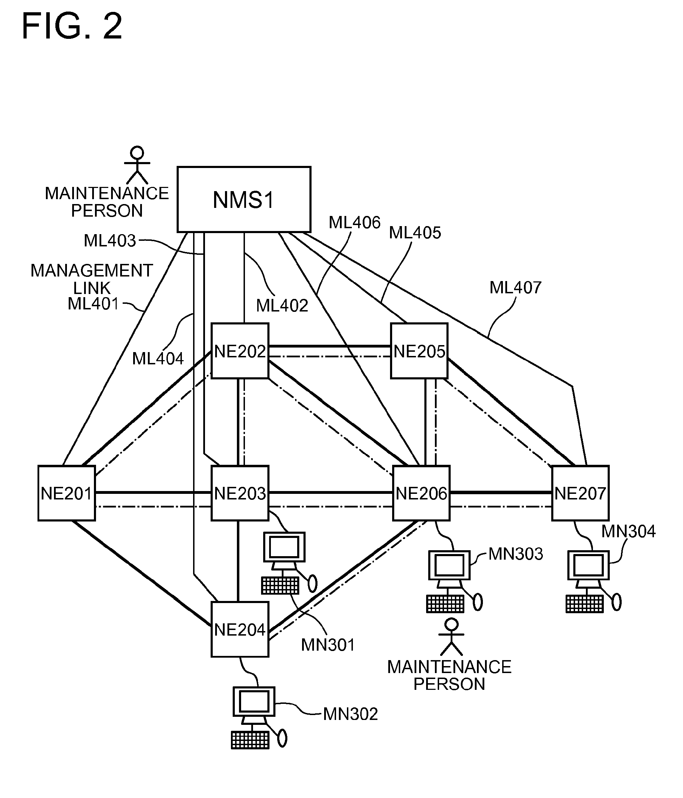

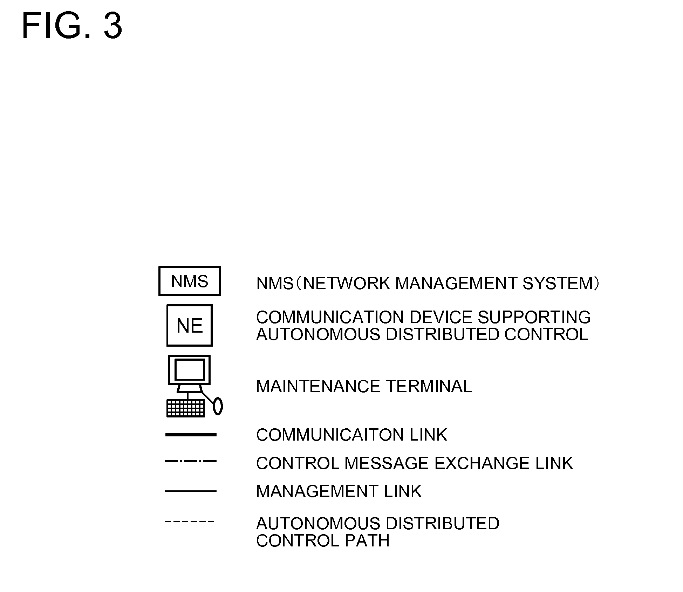

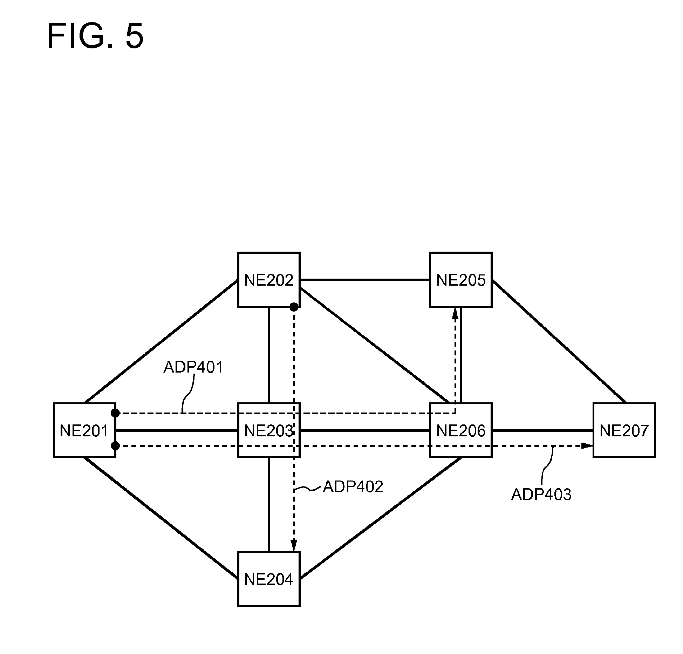

Fig. 2 shows an exemplary configuration of a network supporting autonomous distributed control (may be called as an autonomous distributed control supporting network) such as GMPLS/ASON, as a second exemplary embodiment of the present invention. Fig. 3 shows legends such as symbols and line segments shown in Figs. 2 and 5.

The network supporting autonomous distributed control is a network including communication devices NE201 to NE207 supporting autonomous distributed control such as GMPLS/ASON (may be called autonomous distributed control supporting communication devices), and communication links. When setting paths within the autonomous distributed control supporting network, the respective communication devices NE201 to NE207 perform route control and signaling with autonomous distributed control in accordance with instructions of a maintenance person, perform label reservation and switch settings of the respective communication devices NE201 to NE207, and set paths between designated start point communication devices and end point communication devices. In the network to which the present invention is applied, end-to-end paths are provided by means of packets and communication techniques such as TDM (Time Division Multiplexing) and WDM (Wavelength Multiplexing).

The communication devices NE201 to NE207 perform cross-connection (switching) based on information of labels (fixed length label of packet, time slot, identifiers such as wavelength). Further, the communication devices NE201 to NE207 perform rout control and path management (settings/maintenance/disconnection of paths) of the autonomous distributed control paths (may be simply referred to as paths) ADP 401 to ADP403 by an autonomous distributed control protocol such as GMPLS/ASON.

The communication devices NE201 to NE207 are connected to each other via communication links such as one or more optical fibers or the like. Further, the communication devices NE201 to NE207 are connected with each other via control message exchange links. While communication links are links where user information runs through, the control message exchange links are links to be used for exchanging control information between the communication devices NE201 to NE207. The communication links and the control message exchange links may share the same physical links, depending on the network operation system.

A network management system (NMS) 1 is a system to be used for monitoring and/or maintaining the communication devices NE201 to NE2-7 within the network, and provides a maintenance person with an interface function with the network. The NMS 1 is connected to the respective communication devices NE201 to NE207 via management links ML401 to ML407. The NMS 1 monitors and/or maintains the respective communication devices NE201 to NE207 via the management links ML401 to ML 407.

Maintenance terminals MN301 to MN304 are directly connected to the communication devices, and have a function of individually monitoring and/or maintaining the communication devices. While the NMS 1 monitors and/or maintains the respective communication devices NE201 to NE207 within the network from a remote location via the management links ML401 to ML407, the maintenance terminals MN301 to MN304 are directly connected to the communication devices and individually monitor and/or maintain the communication devices. This is the difference between them.

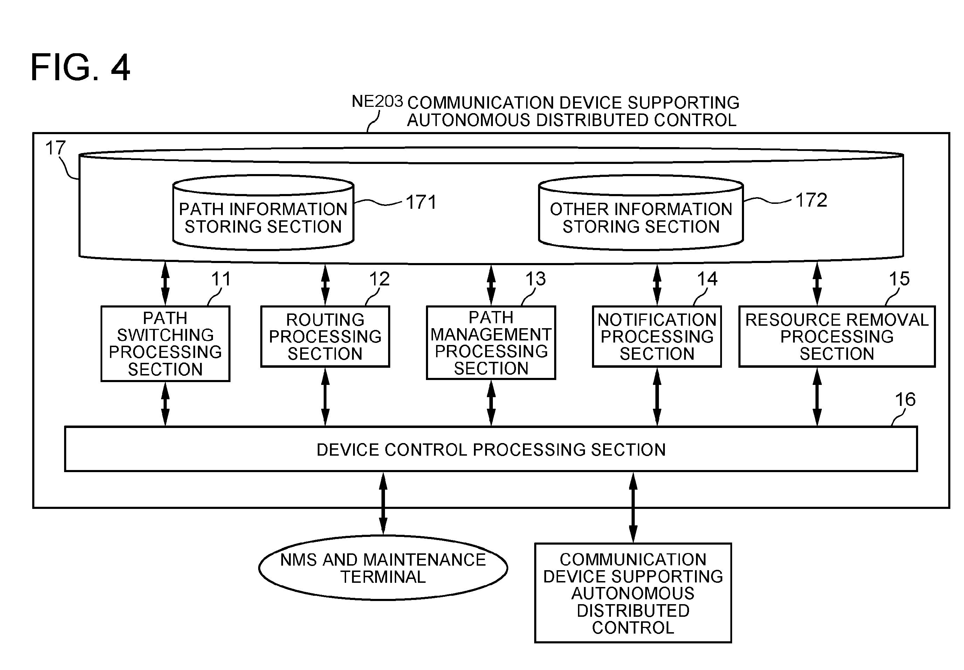

Fig. 4 shows functional block diagram of the communication device NE203. It should be noted that other communication devices have the same configuration.

The communication device NE203 includes a path switching processing section 1l, a routing processing section 12, a path management processing section 13, a notification processing section 14, a resource removal processing section 15, a device control processing section 16, and a storage device 17 such as a disk device.

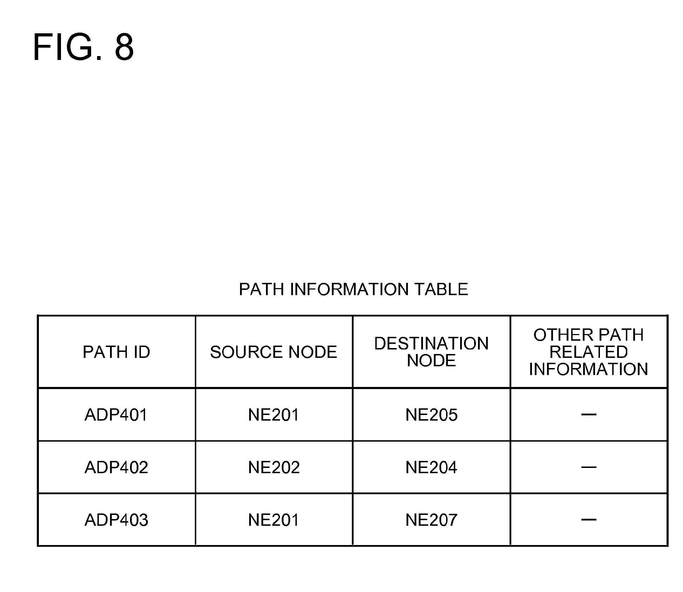

The storage device 17 includes a path information storing section 171 which stores information regarding paths, and another information storing section 172 which stores other various types of information. The path information storing section 171 stores a path information table in which, in association with the path ID of each of the paths passing through the self communication device NM203, device IDs (node IDs) of the start point communication device and the end point communication device of the path (see Fig. 8). Further, in the path information storing section 171, address information of the start point communication devices and the end point communication devices of the paths passing through the self communication device NE203 is also registered.

The device control processing section 16 has a function of sorting messages transmitted from the NMS 1, the maintenance terminal MN301, or adjacent communication devices into processing sections according to the types thereof, a function of controlling transmission and reception of massages between the processing sections, and a function of transmitting messages output from the processing sections to the MNS 1, the maintenance terminal MN301, or adjacent communication devices, according to the types of the messages.

The resource removal processing section 15 has a function of, upon receiving a "resource removal preparation request message" from the NMS 1 or the maintenance terminal MN301 via the device control processing section 16, retrieving information regarding the paths passing through the self communication device NE203 from the path information table stored in the path information storing section 171, and a function of transmitting a "switching request message" to the start point communication device of each of the retrieved paths. The "switching request message" includes the path ID of the retrieved path (source path), the device ID of the start point communication device of the path, the device ID of the end point communication device of the path, and the device ID of the self communication device NE203 (device ID of the removal target communication device). The reason for including the device ID of the removal target communication device in the "switching request message" is to prevent the removal target communication device from being included in the switching destination path. Further, the resource removal processing section 15 has a function of transmitting, to the NMS or maintenance terminals, a "resource removal preparation success message" if it has been able to receive a "switching completion message" within a predetermined time from the time of transmitting the "switching request message", and transmitting a "resource removal preparation failure message" if it has not been able to receive the "switching completion message" within the time.

The path switching processing section 11 has a function of switching a signal from the source path to the destination path. The routing processing section 12 has a function of performing exchange of link information and route computation of the path. The path management processing section 13 has a function of performing setting/maintenance/disconnection of paths. The notification processing section 14 has a function of notifying the NMS or the maintenance terminals of various kinds of information of the communication devices.

The communication device NE203 with these functions can be implemented by a computer. In that case, the following procedures will be taken, for example. That is, a disk storing a program for causing a computer to function as the communication device NE203, and a semiconductor memory or the like are prepared, and the computer is operated to read the program. The computer controls the operation of itself in accordance with the readout program, to thereby implement, on the self computer, the path switching processing section 1l, the routing processing section 12, the path management processing section 13, the notification processing section 14, the resource removal processing section 15, and the device control processing section 16 so as to operate those sections to perform the processes described below.

### [Description of Operation of Second Exemplary Embodiment]

Next, operation of the present embodiment will be described in detail. In this description, the case of removing the communication device NE203 from the network shown in Fig. 5 will be described as an example. It should be noted that the network shown in Fig. 5 includes three paths ADP401 to ADP403 which are the same as those in the network of Fig. 1.

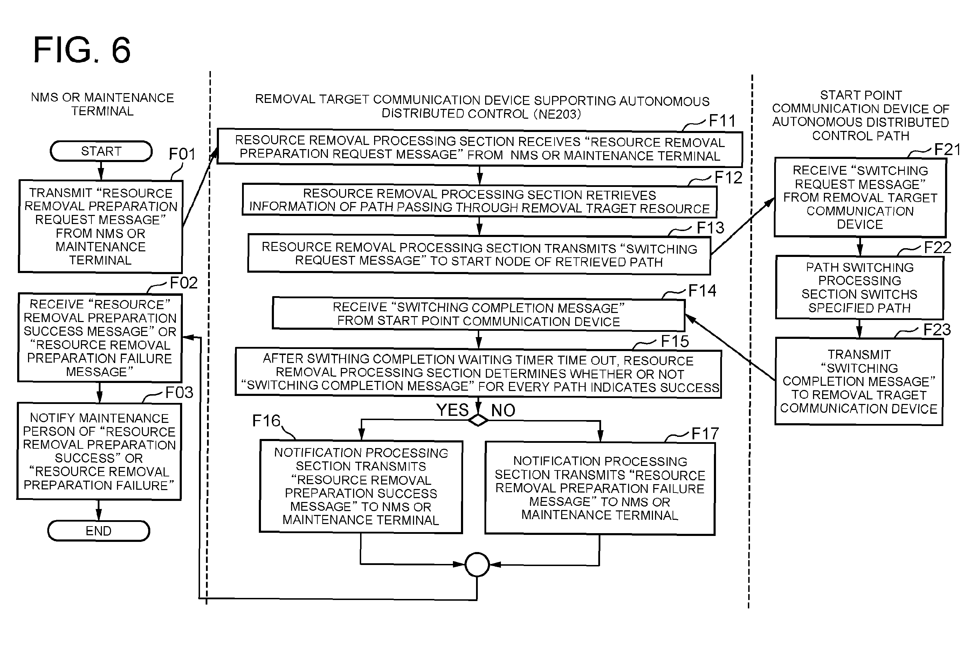

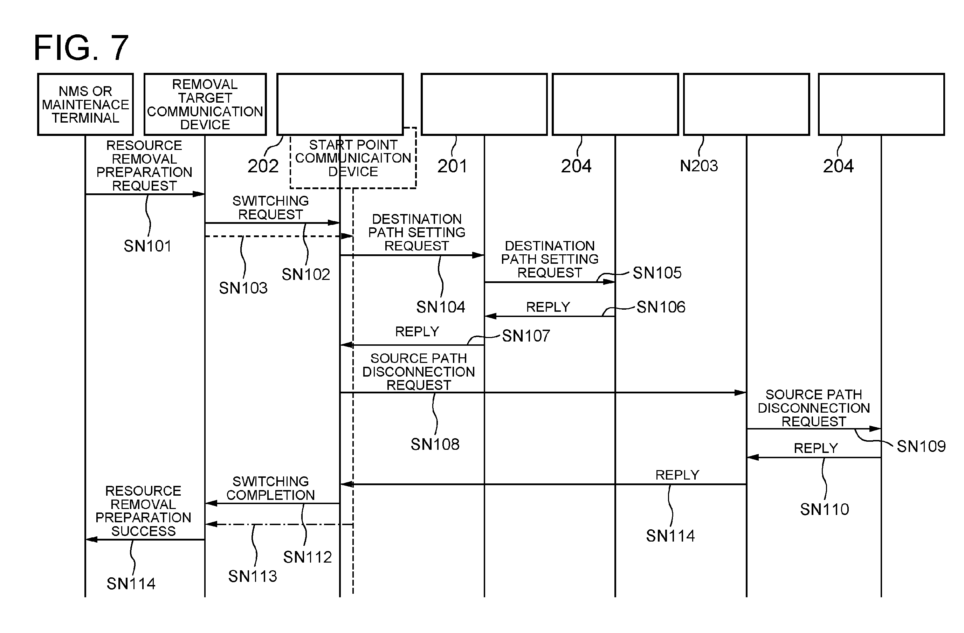

The flowchart of Fig. 6 shows an exemplary process performed by the NMS or the maintenance terminal when the communication device NE203 is to be removed, an exemplary process performed by the removal target communication device (removal target communication device supporting autonomous distributed control) NE203, and an exemplary process performed by the start point communication device of a path (autonomous distributed control path start point communication device). The sequence chart of Fig. 7 shows a sequence from the time that the maintenance person transmits a resource removal preparation request message from the NMS or the maintenance terminal to the removal target communication device NE203 until the time that the resource removal preparation is completed.

(1) At F01 in Fig. 6, the NMS or the maintenance terminal transmits, to the removal target communication device NM203, a "resource removal preparation request message" identifying the communication device as a removal target resource in accordance with an instruction of the maintenance person (see SN101 in Fig. 7).

(2) At F11 in Fig. 6, the removal target communication device NE203 receives the "resource removal preparation request message" (see SN101 in Fig. 7). This "resource removal preparation request message" is transferred to the communication device removal processing section 15 via the device control processing section 16.

(3) At F12 in Fig. 6, as the removal target resource identified in the message is a communication device, the resource removal processing section 15 of the removal target communication device NE203 refers to the path information table stored in the path information storage section 171 and retrieves the paths passing through the self communication device NE203. Assuming that the contents of the path information table are those shown in Fig. 8, the paths ADP401, ADP402, and ADP403 are retrieved as paths passing through the self communication device NE203.

(4) At F13 in Fig. 6, the resource removal processing section 15 of the removal target communication device NE203 transmits a "switching request message" to the start point communication device of each of the paths passing through the self communication device NE203 (see SN102 and SN103 in Fig. 7). In the network configuration shown in Fig. 5, "switching request messages" for the paths ADP401 and ADP403 are transmitted to the communication device NE201, and a "switching request message" for the path ADP402 is transmitted to the communication device NE202. Each of the "switching request messages" includes the path ID of the source path, the device ID of the start point communication device, the device ID of the end point communication device, and the device ID of the removal target communication device NE203. Further, the resource removal processing section 15 activates a switching completion waiting timer when the "switching request messages" are transmitted.

(5) At F21 in Fig. 6, the start point communication devices NE201 and NE202 receive the "switching request message" (see SN102 and SN103 in Fig. 7).

(6) At F22 of Fig. 6, the path switching processing section 11 of each of the start point communication devices NE201 and NE202 performs a process to switch the source path, for which switching is requested, to the destination path. It should be noted that a process to switch the path is also performed in the path switching processing section 11 of each of the communication devices existing on the source path and on the destination path. In the following (6-1) to (6-16), an exemplary process for switching a path will be described. Although description will be given only for the case of switching the path ADP402 in (6-1) to (6-16), the other paths ADP401 and ADP403 can also be switched in the same manner.

(6-1) The path switching processing section 11 in the start point communication device NE202 on the path ADP402 generates a "switching destination path setting request message" based on the "switching request message" transmitted from the removal target communication device NE203. More specifically, the path switching processing section 11 first requests the routing processing section 12 to perform route computation for a path (destination path) not passing through the removal target communication device NE203 and using the communication devices NE202 and NE204 as the start point and the end point thereof. Upon receiving this request, the routing processing section 12 computes the route of the switching destination path not passing through the removal target communication device NE203 and using the communication device NE202 as the start point and using the communication device NE204 as the end point. In this example, it is assumed that a path passing NE202→NE201→NE204 is computed as a switching destination path. Next, the path switching processing section 11 performs a path setting process of the route of the path in accordance with an autonomous distributed control protocol such as GMPLS. Namely, the path switching processing section 11 generates a "switching destination path setting request message" including the device ID of the start point communication device NE202, the device ID of the end point communication device NE204, the path ID of the switching destination path, and route information of the switching destination path computed by the routing processing section 12.

(6-2) The path switching processing section 11 of the start point communication device NE202 transmits the "switching destination path setting request message" to the adjacent communication device NE201 on the switching destination path (see SN104 in Fig. 7).

(6-3) The path switching processing section 11 of the communication device EN201 transfers the "switching destination path setting request message" to the end point communication device NE204 (SN105 in Fig. 7).

(6-4) The path switching processing section 11 of the end point communication device NE204 performs a setting process of the switching destination path by means of the path management processing section 13.

(6-5) The path switching processing section 11 of the end point communication device NE204 transmits a "reply message" to the communication device NE201 (see SN106 in Fig. 7). This reply message includes the device ID of the start point communication device NE202, the device ID of the end point communication device NE204, the path ID of the switching destination path, the label, and the like. If the setting process has been failed, the path switching processing section 11 sends back a "replay message", including the fact that the setting process has been failed and the path ID of the switching destination path, to the start point communication device NE202 via the communication device NE201.

(6-6) The path switching processing section 11 of the communication device NE201 performs the setting process of the switching destination path by means of the path management processing section 13.

(6-7) The path switching processing section 11 of the communication device NE201 transmits a "reply message" to the start point communication device NE202 (see SN107 in Fig. 7). This reply message includes the device ID of the start point communication device NE202, the device ID of the end point communication device NE204, the path ID of the switching destination path, the label, and the like. If the setting process has been failed, the path switching processing section 11 sends back a "replay message", including the fact that the setting process has been failed and the path ID of the switching destination path, to the communication device NE202.

(6-8) The path switching processing section 11 of the start point communication device NE202 performs the setting process of the switching destination path by means of the path management processing section 13.

Through these processes, setting of the switching destination path is performed. As described above, the switching destination path is established in such a manner that a "switching destination path setting request message" is transmitted from the start point communication device to the end point communication device along the computed route, and a "reply message" is transmitted in a route opposite the route of the witching destination path setting request message", whereby resources in the respective communication devices are secured and control of switching is performed. After the switching destination path has been established, the start point communication device NE202 switches the transmission route of a signal having been transmitted through the switching source path to the switching destination path. Then, a process to disconnect the switching source path, which has not been necessary any more, is performed in accordance with an autonomous distributed control protocol such as GMPLS. An example of a disconnection process will be described below.

(6-9) First, the path switching processing section 11 of the start point communication device NE202 transmits a "switching source path disconnection request message" to the adjacent communication device NE203 on the switching source path ADP402 (SN108 in Fig. 7).

(6-10) The path switching processing section 11 of the communication device NE203 transmits the "switching source path disconnection request message" to the end point communication device NE204 of the switching source path (see SN109 in Fig. 7).

(6-11) The path switching processing section 11 of the end point communication device NE204 performs a disconnection process of the switching source path ADP402 by means of the path management processing section 13.

(6-12) The path switching processing section 11 of the end point communication device NE204 transmits a "reply message" to the adjacent communication device NE203 on the switching source path ADP402 (see SN110 in Fig. 7). It should be noted that if the disconnection process has been failed, the path switching processing section 11 transmits a "reply message" including the fact that the disconnection process has been failed and the path ID of the switching source path.

(6-13) The path switching processing section 11 of the communication device NE203 performs a disconnection process by means of the path management processing section 13.

(6-14) The path switching processing section 11 of the communication device NE203 transmits a "reply message" to the start point communication device NE202 (see SN111 in Fig. 7).

(6-15) The path switching processing section 11 of the start point communication device NE202 performs a disconnection process of the switching source path ADP402 by means of the path management processing section 13.

Through these processes, disconnection of the switching source path is performed. As described above, the switching source path is disconnected in such a manner that a "switching source path disconnection request message" is transmitted from the start point communication device to the end point communication device along the route of the switching source path, and a "reply message" is transmitted in a route opposite to the route of the "switching source path disconnection request message", whereby release of the resources in the respective communication devices and control of switching are performed.

The processes regarding F22 in Fig. 6 are as described above. Although the switching process of the path ADP402 has been described in (6-1) to (6-15), the same switching processes will be performed on the paths ADP401 and ADP403.

(7) At F23 in Fig. 6, when switching of the paths ADP401 to ADP403 has been completed, the notification processing section 14 of each of the start point communication devices NE102 and NE202 transmits a "switching completion message" to the removal target communication device NE203 (see SN112 and SN113 in Fig. 7). The "switching completion message" includes information indicating whether or not switching of the path has been performed successfully, and the path IDs of the switching source path and the switching destination path.

(8) At F14 in Fig. 6, the removal target communication device NE203 receives the "switching completion messages" from the start point communication devices NE201 and the NE202 (see SN112 and SN 113 in Fig. 7).

(9) At F15 in Fig. 6, the resource removal processing section 15 of the removal target communication device NE203 determines whether switching of all paths requested at F13 has been performed successfully, when the switching completion waiting timer has been time out.

(10) If switching of all requested paths has been performed successfully (if switching completion messages indicating success of switching for all requested paths are returned), at F16, the resource removal processing section 15 of the removal target communication device NE203 asks the notification processing section 14 to transmit a "resource removal preparation success message" to the NMS 1 or the maintenance terminal (see SN114 in Fig. 7). It should be noted that the transmission destination of the message is set to be the same as the transmission source of the resource removal preparation request.

(11) If switching of any or all of the requested autonomous distributed control paths is failed, at F17, the resource removal processing section 15 of the removal target communication device NE203 asks the notification processing section 14 to transmits a "resource removal preparation failure message" to the NMS 1 or the maintenance terminal.

(12) At F02, the NMS 1 or the maintenance terminal receives the "resource removal preparation success message" or the "resource removal preparation failure message" from the removal target communication device NE203.

(13) At F03, the NMS 1 or the maintenance terminal notifies the maintenance person of the "resource removal preparation success" or the "resource removal preparation failure" by means of screen display or the like.

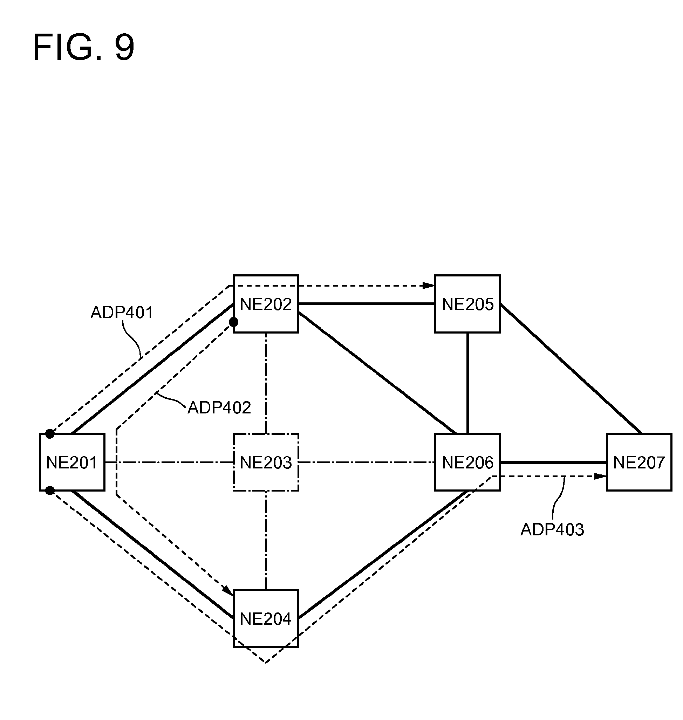

(14) If the removal preparation of the communication device has been performed successfully, as there is no path passing through the removal target communication device NE203 as shown in Fig. 9, the maintenance person performs removal work of the communication device NE203. If the removal preparation of the communication device is failed, the maintenance person may or may not perform removal work, in accordance with the network management policy.

Although, in the above description, the "switching request message" of the path is input to the start point communication device of the path at F13 (see Fig. 6), the message may be input to another communication device on the path. In that case, the "switching request message" includes the device ID of the communication device to which the message is to be input, the device ID of the end point communication device, and the path ID. Then, the communication device, to which the "switching request message" is to be input, performs a process which is the same as that of the start point communication device described above.

The present embodiment configured as described above can achieve the following advantageous effects.

A first advantageous effect is that when a communication device is to be removed in a network being operated, a load placed on the maintenance person can be reduced. This is because when a "resource removal preparation request message" is input to a removal target communication device, the removal target communication device retrieves the paths passing through the self device which is the removal target resource, and for each of the retrieved paths, transmits a "switching request message" of the path to a start point communication device of the path, and the start point communication device which received the "switching request message" computes a route of a switching destination path which does not pass through the removal target communication device, and switching of the path is performed in an autonomous distributed manner using the autonomous distributed control function of the network. This means that as the maintenance person is only necessary to input the "resource removal preparation request message" to the removal target communication device, the load placed on the maintenance person can be reduced.

A second advantageous effect is that when a communication device is to be removed in a network being operated, as the start point communication device of each of the paths, which have been set to the removal target communication device, performs switching of the paths, the load necessary for switching can be distributed within the network. As a result, a time required for switching the paths set to the removal target communication device can be reduced. This is because a computing process of a route required for switching the paths set to the removal target communication device, a setting process of the switching destination path, and a disconnecting process of the switching source path are performed by each of the start point communication devices of the autonomous distributed control paths. In the case where load distribution is not performed as the present embodiment, if one target communication device or the NMS or the maintenance terminal performs switching process for all of the set paths, a time required for switching all paths is increased.

### [Third Exemplary Embodiment]

Next, a third exemplary embodiment of the present invention will be described in detail with reference to the drawings. This embodiment is for the case where a communication link is specified as a removal target resource.

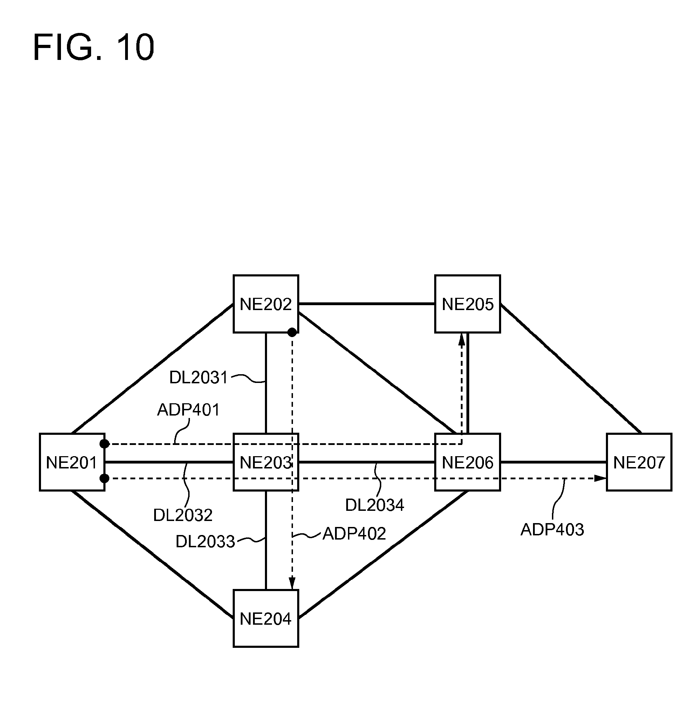

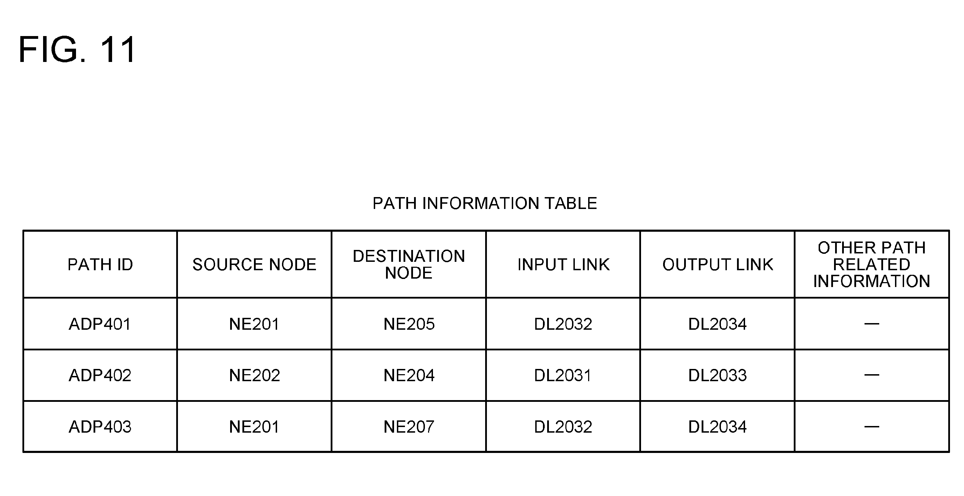

Fig. 10 shows an exemplary configuration of the network from which a communication link is to be removed, and Fig. 11 shows an example of the path information table of the communication device NE203 to which information regarding communication links used by a path is added. Referring to Fig. 11, in the case of the path ADP402, it is noted that data is input from a communication link DL2031 and is output to the communication link DL2033.

Operation of removing a communication link is almost the same as that of removing a communication device. In this embodiment, description will be mainly given for the differences from the second exemplary embodiment with reference to Fig. 6.

At F01, a "link removal preparation request message" specifying a communication link as a removal target resource is transmitted to only one of the two communication devices connected to the link to be removed. This message includes the link ID of the communication link to be removed.

At F12, as the removal target resource specified by the "link removal preparation request message" is a communication link, the resource removal processing section 15 of the message communication device NE203 refers to the path information table shown in Fig. 11 and retrieves the path IDs of the paths passing through the removal target communication link. For example, in the case of removing the communication link DL2034 shown in Fig. 10, the path ADP401 and the ADP403 are the paths to be switched. As such, at F13, the resource removal processing section 15 transmits a "switching request message" for the path ADP401 and a "switching request message" for the path ADP403, to the start point communication device NE201 of the retrieved paths. It should be noted that the "switching request message" includes the path ID of the switching source path, the device ID of the start point communication device, the device ID of the end point communication device, and the link ID of the removal target communication link. Then, at F22, the start point communication device NE201 of the path performs switching of the path ADP401 and the path ADP403. At that time, the routing processing section 12 of the start point communication device computes a route of a path not passing through the removal target communication link specified by the message and using the start point communication device and the end point communication device specified by the "switching request message" as the start point and the end point.

Other operations are the same as those of the second exemplary embodiment.

As described above, according to the present embodiment, when a communication link is to be removed, a maintenance person is only necessary to input a link removal preparation request specifying a communication link as a removal target resource, to the communication devices connected to the removal target communication link. As such, the workload and the work hours of the maintenance person can be reduced significantly.

### [Fourth Exemplary Embodiment]

Next, a fourth exemplary embodiment of the present invention will be described in detail with reference to the drawings. This embodiment is for the case where an interface connected to a communication link is specified as a removal target resource.

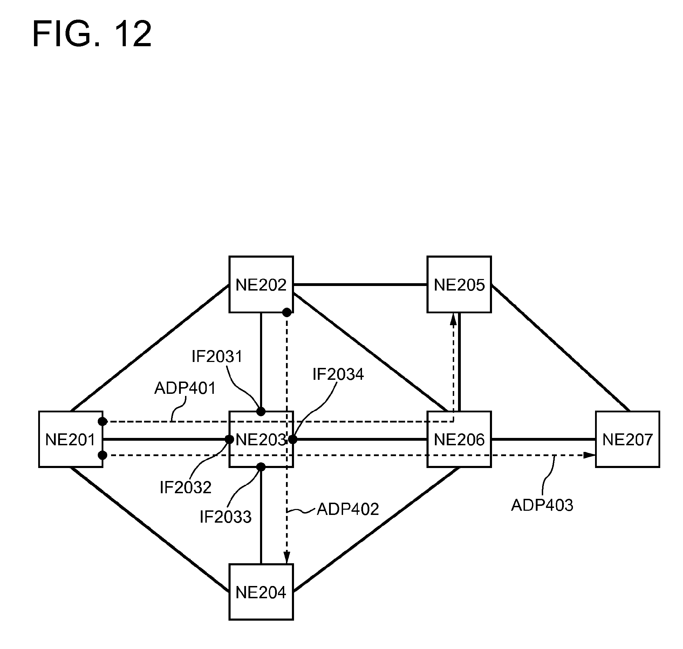

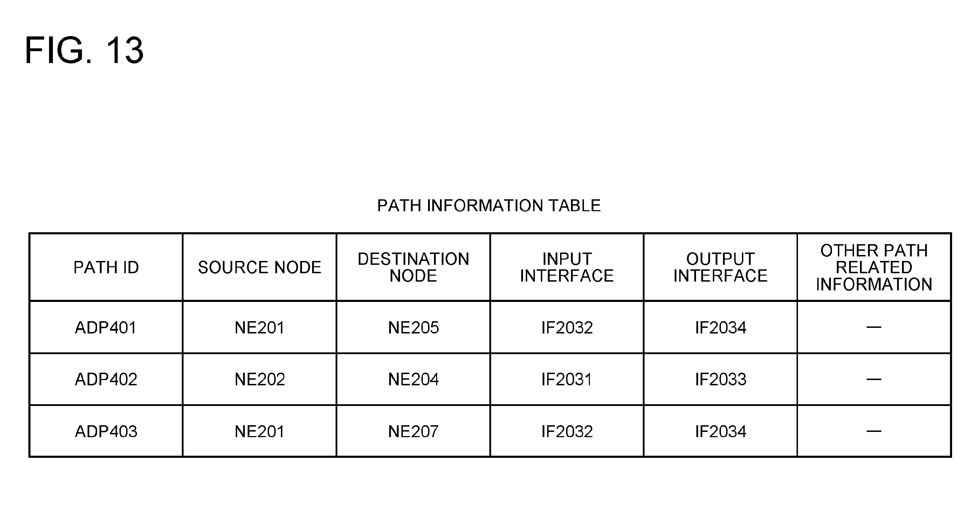

Fig. 12 shows an exemplary configuration of a network from which an interface connected with a communication link is to be removed, and Fig. 13 shows an exemplary path information table of the communication device NE203, to which information regarding interface used by paths is added. Referring to Fig .13, in the case of the path ADP402, data is input from an input interface IF2031 and output from an output interface IF2033.

Operation for removing an interface connected to a communication link is almost the same as that of removing a communication device. In this embodiment, description will be given mainly for differences from the second exemplary embodiment with reference to Fig. 6.

At F01, a "link removal preparation request message" specifying an interface, connected with a communication link, as a removal target resource is transmitted to a communication device connected to the interface to be removed. This message includes the ID of the interface to be removed.

At F12, as the removal target resource specified by the "link removal preparation request message" is an interface, the resource removal processing section 15 of the message communication device NE203 refers to the path information table shown in Fig. 13 and retrieve path IDs of the paths passing through the removal target interface. For example, in the case of removing an interface IF2034 of the communication device NE203 shown in Fig. 12, the path ADP401 and the path ADP403 are the paths to be switched. As such, at F13, the resource removal processing section 15 transmits a "switching request message" for the path ADP401 and a "switching request message" for the path ADP403, to the start point communication device NE201 of the retrieved path. It should be noted that each "switching request message" includes the path ID of the switching source path, the device ID of the start point communication device, the device ID of the end point communication device, and the ID of the switching target interface. Then, at F22, the path start point communication device NE201 performs switching of the path ADP401 and the ADP403. At this time, the routing processing section 12 of the start point communication device computes a route of a path not passing through the removal target interface specified by the message and using the start point communication device and the end point communication device specified by the "switching request message" as the start point and the end point.

Other operations are the same as those of the second exemplary embodiment.

As described above, according to the present embodiment, when an interface connected with a communication link is to be removed, a maintenance person is only necessary to input a resource removal preparation request specifying an interface as a removal target resource, to the communication devices having the removal target interface. As such, the workload and the work hours of the maintenance person can be reduced significantly.

### [Fifth Exemplary Embodiment]

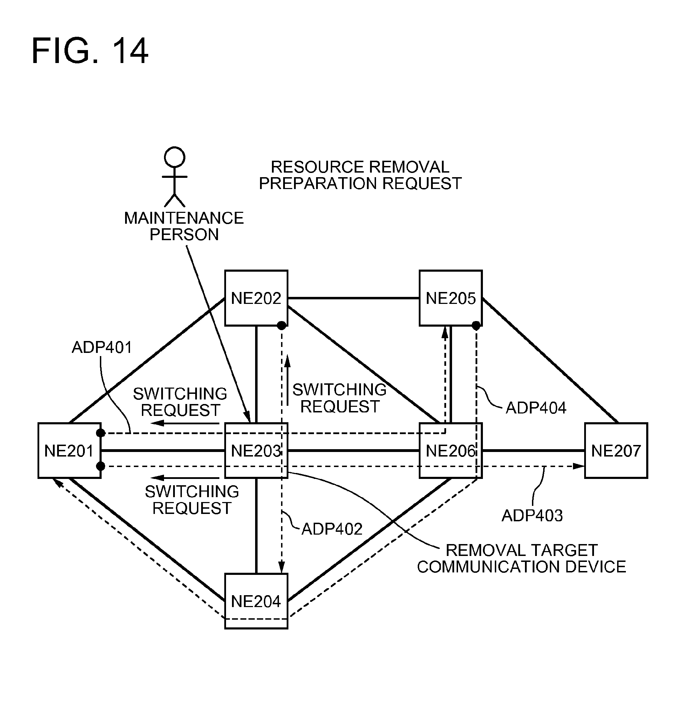

Next, a fifth exemplary embodiment of the present invention will be described with reference to Fig. 14. Fig. 14 shows an example of a network before a resource is removed in the fifth exemplary embodiment of the present invention. This embodiment describes the outline of a path switching method, a communication system, a communication device, and a program of the invention.

In a path switching method according to the present embodiment, among one or more paths ADP401 to ADP403 set between the communication devices NE201 to 207, all paths, in which the communication device NE203 having a removal target resource serves as a relay point, are switched to other paths having routes not passing through the removal target resource, as shown in Fig. 14.

When switching, in the present embodiment, a removal preparation request specifying a removal target resource is transmitted from an external requesting source to the communication device NE203 serving as a relay point .

Upon receiving the removal preparation request, the communication device NE203 detects paths identifier of the paths ADP401 to ADP403 passing through the removal target resource and the communication devices NE201 and NE202 serving as the start points, and for each of the detected paths, transmits a path switching request specifying the path identifier of the detected path and the removal target resource to the start point communication devices NE201 and NE202 of the path.

Upon receiving the path switching request, each of the communication devices NE201 and NE202 computes a route of another path having the same start point and the end point as those of the path specified by the path identifier and not passing through the removal target resource, and after performing a setting process of the other path having the computed route, performs a disconnecting process of the path identified by the path identifier.

As described above, in the path switching method according to the present embodiment, as the communication device NE203 receiving the removal preparation request detects the path identifiers of the paths ADP401 to ADP403 passing through the removal target resource and the start point communication devices NE201 and NE203, the maintenance person is not necessary to retrieve the paths passing through the removal target resource by itself. Further, for each of the detected paths, as the communication device NE203 receiving the removal preparation request transmits a path switching request specifying the path identifier of the detected path and the removal target resource to the communication devices NE201 and NE202 serving as the start points of the paths, the maintenance person is not necessary to input a path switching request by himself/herself. Further, each of the communication devices NE201 and NE202 receiving the path switching request computes a route of another path having the same start point and the end point as those of the path identified by the path identifier and not passing through the removal target resource, and after performing a setting process of the other path having the computed route, performs a disconnecting process of the path identified by the path identifier. As such, the maintenance person is not necessary to perform route computation of another path. As a result, as the maintenance person is only necessary to input a communication device removal preparation request to the removal target communication device NE203, the workload and the work hours of the maintenance person are reduced significantly.

Further, in the above-described path switching method, each of the communication devices has a function of setting and disconnecting paths in accordance with an autonomous distributed control protocol, and a setting process of the other path and a disconnecting process of the source path are performed in accordance with the autonomous distributed control protocol.

Further, in the above-described path switching method, the removal target resource may be the communication device itself serving as a relay point. In that case, in the path switching method, the communication device serving as the relay point is adapted to refer to the path information table storing the path identifier, the identifier of the start point communication device, and the identifier of the end point communication device, for each of the paths in which the self communication device being the relay point, and detect information of the paths passing through the self communication device which is the removal target resource.

Further, in the above-described path switching method, the removal target resource may be a communication link connected to the communication device serving as the relay point. In that case, in the path switching method, the communication device serving as the relay point is adapted to refer to the path information table storing the path identifier, the identifier of the start point communication device, the identifier of the end point communication device, and the communication link used in the path, for each of the paths in which the self communication device serves as the relay point, and detect information of the path passing through the communication link which is the removal target resource.

Further, in the above-described path switching method, the removal target resource may be an input/output interface connected with a communication link of the communication device serving as the relay point. In that case, in the path switching method, the communication device serving as the relay point is adapted to refer to the path information table storing the path identifier, the identifier of the start point communication device, the identifier of the end point communication device, and the identifier of the input/output interface used in the path, for each of the paths in which the self communication device serves as the relay point, and detect information of the path passing through the input/output interface which is the removal target resource.

Further, in the above-described path switching method, the communication device receiving the path switching request is adapted to transmit a reply message indicating whether or not path switching has been performed successfully to the communication device serving as the relay point, and the communication device serving as the relay point is adapted to determine, for every path for which switching has been requested, whether or not a reply message indicating successful switching has been received within a predetermined time period, and transmits the determination result to the request source.

Further, a communication system according to another aspect of the present invention, in which the path switching method is to be performed, is adapted to include a plurality of communication devices and at least one link connecting the communication devices. A communication device serving as a relay point of a path includes a resource removal processing unit which, when receiving from an outside request source a removal preparation request specifying a removal target resource existing in the communication device itself, detects a path identifier and a communication device serving as a start point of each of the paths passing through the removal target resource, and for each detected path, transmits a path switching request specifying the path identifier of the detected path and the removal target resource to the communication device serving as the start point of the path, and the communication device serving as the start point of the path includes a routing processing unit which, when receiving the path switching request specifying the path identifier and the removal target resource, computes a route of another path having a start point and an end point which are the same as those of the path identified by the path identifier and not passing through the removal target resource, and a path switching processing unit which, after performing a setting process of the other path computed by the routing processing unit, performs a disconnecting process of the path identified by the path identifier.

The communication system is adapted such that each of the communication devices has a function of setting and disconnecting paths by an autonomous distributed control protocol, and the setting process of the other path and the disconnecting process of the path are performed in accordance with the autonomous distributed control protocol.

The communication system is adapted such that the removal target resource may be the communication device itself serving as the relay point. In that case, the communication system is adapted such that for each path using the self communication device as the relay point, the resource removal processing unit of the communication device serving as the relay point refers to a path information table storing a path identifier, an identifier of the communication device serving as the start point, and an identifier of a communication device serving as the end point, and detects information of the path passing through the self communication device which is the removal target resource.

The communication system is adapted such that the removal target resource may be a communication link connected to the communication device serving as the relay point. In that case, the communication system is adapted such that for each path using the self communication device as the relay point, the resource removal processing unit of the communication device serving as the relay point refers to a path information table storing a path identifier, an identifier of the communication device serving as the start point, and an identifier of a communication device serving as the end point, and the communication link used in the path, and detects information of the path passing through the communication link which is the removal target resource.

The communication system is adapted such that the removal target resource may be an input/output interface connected with a communication link of the communication device serving as the relay point. In that case, the communication system is adapted such that for each path using the self communication device as the relay point, the resource removal processing unit of the communication device serving as the relay point refers to a path information table storing a path identifier, an identifier of the communication device serving as the start point, and an identifier of a communication device serving as the end point, and an identifier of the input/output interface used in the path, and detects information of the path passing through the input/output interface which is the removal target resource.

The communication system is adapted such that the path switching processing unit of the communication device receiving the path switching request transmits a reply message indicating whether or not path switching has been performed successfully to the communication device serving as the relay point, and for every path for which switching was requested, the resource removal processing unit of the communication device serving as the relay point determines whether or not to receive a reply message indicating successful switching within a predetermined time period, and transmits a determination result to the request source.

A communication device according to another aspect of the present invention, in which the path switching method is to be performed, is adapted to include a resource removal processing unit which, when receiving from an outside request source a removal preparation request specifying a removal target resource existing in the communication device itself, detects a path identifier and a communication device serving as a start point of each of the paths passing through the removal target resource, and for each detected path, transmits a path switching request specifying the detected path identifier of the path and the removal target resource to the communication device serving as the start point of the path, a routing processing unit which, when receiving the path switching request specifying the path identifier and the removal target resource, computes a route of another path having a start point and an end point which are the same as those of the path identified by the path identifier and not passing through the removal target resource, and a path switching processing unit which, after performing a setting process of the other path computed by the routing processing unit, performs a disconnecting process of the path identified by the path identifier.

The communication device is adapted to further include a function of setting and disconnecting paths by an autonomous distributed control protocol, and the setting process of the other path and the disconnecting process of the path are performed in accordance with the autonomous distributed control protocol.

The communication device is adapted such that the removal target resource may be the communication device. In that case, the communication device is adapted such that for each path using the self communication device as the relay point, the resource removal processing unit refers to a path information table storing a path identifier, an identifier of the communication device serving as the start point, and an identifier of a communication device serving as the end point, and detects information of the path passing through the self communication device which is the removal target resource.

The communication device is adapted such that the removal target resource may be a communication link connected to the communication device. In that case, the communication device is adapted such that for each path using the self communication device as the relay point, the resource removal processing unit refers to a path information table storing a path identifier, an identifier of the communication device serving as the start point, and an identifier of a communication device serving as the end point, and the communication link used in the path, and detects information of the path passing through the communication link which is the removal target resource.

The communication device is adapted such that the removal target resource may be an input/output interface connected with a communication link of the communication device is connected. In that case, the communication device is adapted such that for each path using the self communication device as the relay point, the resource removal processing unit refers to a path information table storing a path identifier, an identifier of the communication device serving as the start point, and an identifier of a communication device serving as the end point, and an identifier of the input/output interface used in the path, and detects information of the path passing through the input/output interface which is the removal target resource.

The communication device is adapted such that the path switching processing unit transmits a reply message indicating whether or not path switching has been performed successfully to the communication device serving as the relay point, and for every path for which switching was requested, the resource removal processing unit determines whether or not to receive a reply message indicating successful switching within a predetermined time period, and transmits a determination result to the request source.

The above-described communication device can be realized by a program being installed in a computer. Specifically, a program according to another aspect of the present invention includes computer implementable instructions to cause a computer to function as a resource removal processing unit which, when receiving from an outside request source a removal preparation request specifying a removal target resource existing in the communication device itself, detects a path identifier and a communication device serving as a start point of each of the paths passing through the removal target resource, and for each detected path, transmits a path switching request specifying the detected path identifier of the path and the removal target resource to the communication device serving as the start point of the path; a routing processing unit which, when receiving the path switching request specifying the path identifier and the removal target resource, computes a route of another path having a start point and an end point which are the same as those of the path identified by the path identifier and not passing through the removal target resource; and a path switching processing unit which, after performing a setting process of the other path computed by the routing processing unit, performs a disconnecting process of the path identified by the path identifier.

As the communication system, the communication device, and the program having the above-described configurations have the same actions as that of the path switching method, they can achieve the object of the present invention.

### (example 1)

An example 1 describes a method of switching every path using as a relay point a communication device including a removal target resource, among one or more paths set between communication devices, to another path having a route not passing through the removal target resource, the method comprising:
transmitting a removal preparation request specifying the removal target resource from an outside request source to the communication device serving as the relay point;
detecting, by the communication device receiving the removal preparation request, a path identifier and a communication device serving as a start point of each path passing through the removal target resource, and for each detected path, transmitting a path switching request specifying the path identifier of the detected path and the removal target resource to the communication device serving as the start point of the path;
computing, by the communication device receiving the path switching request, a route of another path not passing through the removal target resource and having a start point and an end point which are the same as those of the path identified by the path identifier, and after performing a setting process of the other path having the computed route, performing a disconnecting process of the path identified by the path identifier.

### (example 2)

An example 2 describes the path switching method according to the example 1, wherein each of the communication devices includes a function of setting and disconnecting paths by an autonomous distributed control protocol, and
the setting process of the other path and the disconnecting process of the path are performed in accordance with the autonomous distributed control protocol.

### (example 3)

An example 3 describes the path switching method according to the example 1, wherein the removal target resource is the communication device itself serving as the relay point.

### (example 4)

An example 4 describes the path switching method according to the example 3, wherein for each path using the self communication device as the relay point, the communication device serving as the relay point refers to a path information table storing the path identifier, an identifier of a communication device serving as a start point, and an identifier of a communication device serving as an end point, and detects information of the path passing through the self communication device which is the removal target resource.

### (example 5)

An example 5 describes the path switching method according to the example 1 or 2, wherein the removal target resource is a communication link connected to the communication device serving as the relay point.

### (example 6)

An example 2 describes the path switching method according to the example 5, wherein for each path using the self communication device as the relay point, the communication device serving as the relay point refers to a path information table storing a path identifier, an identifier of a communication device serving as a start point, an identifier of a communication device serving as an end point, and the communication link to be used in the path, and detects information of the path passing through the communication link which is the removal target resource.

### (example 7)

An example 7 describes the path switching method according to the example 1 or 2, wherein the removal target resource is an input/output interface connected with a communication link of the communication device serving as the relay point.

### (example 8)

An example 8 describes the path switching method according to the example 7, wherein for each path using the self communication device as the relay point, the communication device serving as the relay point refers to a path information table storing a path identifier, an identifier of a communication device serving as a start point, an identifier of a communication device serving as an end point, and an identifier of the input/output interface used in the path, and detects information of the path passing through the input/output interface which is the removal target resource.

### (example 9)

An example 9 describes the path switching method according to any one of the examples 1 to 8, wherein
the communication device receiving the path switching request transmits a reply message indicating whether or not path switching has been performed successfully to the communication device serving as the relay point, and
for every path for which switching was requested, the communication device serving as the relay point determines whether or not to receive a reply message indicating successful switching within a predetermined time period, and transmits a determination result to the request source.

### (example 10)

An example 10 describes a communication system comprising:
a plurality of communication devices, and
at least one link connecting the communication devices, wherein
a communication device serving as a relay point of a path includes resource removal processing means for, when receiving from an outside request source a removal preparation request specifying a removal target resource existing in the communication device itself, detecting a path identifier and a communication device serving as a start point of each path passing through the removal target resource, and for each detected path, transmitting a path switching request specifying the detected path identifier of the path and the removal target resource to the communication device serving as the start point of the path, and
the communication device serving as the start point of the path includes:
   routing processing means for, when receiving the path switching request specifying the path identifier and the removal target resource, computing a route of another path having a start point and an end point which are the same as those of the path identified by the path identifier and not passing through the removal target resource, and
   path switching processing means for, after performing a setting process of the other path computed by the routing processing unit, performing a disconnecting process of the path identified by the path identifier.

### (example 11)

An example 11 describes the communication system according to the example 10, wherein each of the communication devices includes a function of setting and disconnecting paths by an autonomous distributed control protocol, and the setting process of the other path and the disconnecting process of the path are performed in accordance with the autonomous distributed control protocol.

### (example 12)

An example 12 describes the communication system according to the example 10 or 11, wherein the removal target resource is the communication device itself serving as the relay point.

### (example 13)

An example 13 describes the communication system according to the example 12, wherein for each path using the self communication device as the relay point, the resource removal processing means of the communication device serving as the relay point refers to a path information table storing a path identifier, an identifier of the communication device serving as a start point, and an identifier of a communication device serving as an end point, and detects information of the path passing through the self communication device which is the removal target resource.

### (example 14)

An example 14 describes the communication system according to the example 10 or 1l, wherein the removal target resource is a communication link connected to the communication device serving as the relay point.

### (example 15)

An example 15 describes the communication system according to the example 14, wherein for each path using the self communication device as the relay point, the resource removal processing means of the communication device serving as the relay point refers to a path information table storing a path identifier, an identifier of a communication device serving as a start point, and an identifier of a communication device serving as an end point, and the communication link used in the path, and detects information of the path passing through the communication link which is the removal target resource.

### (example 16)

An example 16 describes the communication system according to the example 10 or 11, wherein the removal target resource is an input/output interface connected with a communication link of the communication device serving as the relay point.

### (example 17)

An example 17 describes the communication system according to the example 16, wherein for each path using the self communication device as the relay point, the resource removal processing means of the communication device serving as the relay point refers to a path information table storing a path identifier, an identifier of a communication device serving as a start point, and an identifier of a communication device serving as an end point, and an identifier of the input/output interface used in the path, and detects information of the path passing through the input/output interface which is the removal target resource.

### (example 18)

An example 18 describes the communication system according to any one of the examples 10 to 17, wherein
the path switching processing means of the communication device receiving the path switching request transmits a reply message indicating whether or not path switching has been performed successfully to the communication device serving as the relay point, and
for every path for which switching was requested, the resource removal processing means of the communication device serving as the relay point determines whether or not to receive a reply message indicating successful switching within a predetermined time period, and transmits a determination result to the request source.

### (example 19)

An example 18 describes a communication device comprising:
resource removal processing means for, when receiving from an outside request source a removal preparation request specifying a removal target resource existing in the communication device itself, detecting a path identifier and a communication device serving as a start point of each path passing through the removal target resource, and for each detected path, transmitting a path switching request specifying the detected path identifier of the path and the removal target resource to the communication device serving as the start point of the path;
routing processing means for, when receiving the path switching request specifying the path identifier and the removal target resource, computing a route of another path having a start point and an end point which are the same as those of the path identified by the path identifier and not passing through the removal target resource; and
path switching processing means for, after performing a setting process of the other path computed by the routing processing unit, performing a disconnecting process of the path identified by the path identifier.

### (example 20)

An example 20 describes the communication device according to the example 19, further comprising a function of setting and disconnecting paths by an autonomous distributed control protocol, and the setting process of the other path and the disconnecting process of the path are performed in accordance with the autonomous distributed control protocol.

### (example 21)

An example 21 describes the communication device according to the example 19 or 20, wherein the removal target resource is the communication device.

### (example 22)

An example 22 describes the communication device according to the example 21, wherein for each path using the self communication device as the relay point, the resource removal processing means refers to a path information table storing a path identifier, an identifier of a communication device serving as a start point, and an identifier of a communication device serving as an end point, and detects information of the path passing through the self communication device which is the removal target resource.

### (example 23)

An example 23 describes the communication device according to the example 19 or 20, wherein the removal target resource is a communication link connected to the communication device.

### (example 24)

An example 24 describes the communication device according to the example 23, wherein for each path using the self communication device as the relay point, the resource removal processing means refers to a path information table storing a path identifier, an identifier of a communication device serving as a start point, and an identifier of a communication device serving as an end point, and the communication link used in the path, and detects information of the path passing through the communication link which is the removal target resource.

### (example 25)

An example 25 describes the communication device according to the example 19 or 20, wherein the removal target resource is an input/output interface connected with a communication link of the communication device.

### (example 26)

An example 26 describes the communication device according to the example 25, wherein for each path using the self communication device as the relay point, the resource removal processing means refers to a path information table storing a path identifier, an identifier of a communication device serving as a start point, and an identifier of a communication device serving as an end point, and an identifier of the input/output interface used in the path, and detects information of the path passing through the input/output interface which is the removal target resource.

### (example 27)

An example 27 describes the communication device according to any one of the examples 19 to 26, wherein
the path switching processing means transmits a reply message indicating whether or not path switching has been performed successfully to the communication device serving as the relay point, and
for every path for which switching was requested, the resource removal processing means determines whether or not to receive a reply message indicating successful switching within a predetermined time period, and transmits a determination result to the request source.

### (example 28)

An example 28 describes a computer program product comprising computer implementable instructions to cause a computer to function as:
resource removal processing means for, when receiving from an outside request source a removal preparation request specifying a removal target resource existing in the communication device itself, detecting a path identifier and a communication device serving as a start point of each path passing through the removal target resource, and for each detected path, transmitting a path switching request specifying the detected path identifier of the path and the removal target resource to the communication device serving as the start point of the path;
routing processing means for, when receiving the path switching request specifying the path identifier and the removal target resource, computing a route of another path having a start point and an end point which are the same as those of the path identified by the path identifier and not passing through the removal target resource; and
path switching processing means for, after performing a setting process of the other path computed by the routing processing unit, performing a disconnecting process of the path identified by the path identifier.

While the invention has been particularly shown and described with reference to exemplary embodiments thereof, the invention is no limited to these embodiments. It will be understood by those of ordinary skill in the art that various changes in form and details may be made therein without departing from the spirit and scope of the present invention as defined by the claims.

The present invention is applicable to networks supporting autonomous distributed control such as GMPLS/ASON.

## Claims

1. A method of switching every path using as a relay point a communication device including a removal target resource, among one or more paths set between communication devices, to another path having a route not passing through the removal target resource, the method comprising:
transmitting a removal preparation request specifying the removal target resource from an outside request source to the communication device serving as the relay point;
detecting, by the communication device receiving the removal preparation request, a path identifier and a communication device serving as a start point of each path passing through the removal target resource, and for each detected path, transmitting a path switching request specifying the path identifier of the detected path and the removal target resource to the communication device serving as the start point of the path;
computing, by the communication device receiving the path switching request, a route of another path not passing through the removal target resource and having a start point and an end point which are the same as those of the path identified by the path identifier, and after performing a setting process of the other path having the computed route, performing a disconnecting process of the path identified by the path identifier.

2. The path switching method according to Claim 1, wherein each of the communication devices includes a function of setting and disconnecting paths by an autonomous distributed control protocol, and
the setting process of the other path and the disconnecting process of the path are performed in accordance with the autonomous distributed control protocol.

3. A communication system comprising:
a plurality of communication devices, and
at least one link connecting the communication devices, wherein
a communication device serving as a relay point of a path includes resource removal processing means for, when receiving from an outside request source a removal preparation request specifying a removal target resource existing in the communication device itself, detecting a path identifier and a communication device serving as a start point of each path passing through the removal target resource, and for each detected path, transmitting a path switching request specifying the detected path identifier of the path and the removal target resource to the communication device serving as the start point of the path, and
the communication device serving as the start point of the path includes:
routing processing means for, when receiving the path switching request specifying the path identifier and the removal target resource, computing a route of another path having a start point and an end point which are the same as those of the path identified by the path identifier and not passing through the removal target resource, and
path switching processing means for, after performing a setting process of the other path computed by the routing processing unit, performing a disconnecting process of the path identified by the path identifier.

4. The communication system according to Claim 3, wherein each of the communication devices includes a function of setting and disconnecting paths by an autonomous distributed control protocol, and the setting process of the other path and the disconnecting process of the path are performed in accordance with the autonomous distributed control protocol.

5. A communication device comprising:
resource removal processing means for, when receiving from an outside request source a removal preparation request specifying a removal target resource existing in the communication device itself, detecting a path identifier and a communication device serving as a start point of each path passing through the removal target resource, and for each detected path, transmitting a path switching request specifying the detected path identifier of the path and the removal target resource to the communication device serving as the start point of the path;
routing processing means for, when receiving the path switching request specifying the path identifier and the removal target resource, computing a route of another path having a start point and an end point which are the same as those of the path identified by the path identifier and not passing through the removal target resource; and
path switching processing means for, after performing a setting process of the other path computed by the routing processing unit, performing a disconnecting process of the path identified by the path identifier.

6. The communication device according to Claim 5, further comprising a function of setting and disconnecting paths by an autonomous distributed control protocol, and the setting process of the other path and the disconnecting process of the path are performed in accordance with the autonomous distributed control protocol.

7. The communication device according to Claim 5 or 6, wherein the removal target resource is the communication device.

8. The communication device according to Claim 7, wherein for each path using the self communication device as the relay point, the resource removal processing means refers to a path information table storing a path identifier, an identifier of a communication device serving as a start point, and an identifier of a communication device serving as an end point, and detects information of the path passing through the self communication device which is the removal target resource.

9. The communication device according to Claim 5 or 6, wherein the removal target resource is a communication link connected to the communication device.

10. The communication device according to Claim 9, wherein for each path using the self communication device as the relay point, the resource removal processing means refers to a path information table storing a path identifier, an identifier of a communication device serving as a start point, and an identifier of a communication device serving as an end point, and the communication link used in the path, and detects information of the path passing through the communication link which is the removal target resource.

11. The communication device according to Claim 5 or 6, wherein the removal target resource is an input/output interface connected with a communication link of the communication device.

12. The communication device according to Claim 11, wherein for each path using the self communication device as the relay point, the resource removal processing means refers to a path information table storing a path identifier, an identifier of a communication device serving as a start point, and an identifier of a communication device serving as an end point, and an identifier of the input/output interface used in the path, and detects information of the path passing through the input/output interface which is the removal target resource.

13. The communication device according to any one of Claims 5 to 12, wherein
the path switching processing means transmits a reply message indicating whether or not path switching has been performed successfully to the communication device serving as the relay point, and
for every path for which switching was requested, the resource removal processing means determines whether or not to receive a reply message indicating successful switching within a predetermined time period, and transmits a determination result to the request source.

14. A computer program product comprising computer implementable instructions to cause a computer to function as:
resource removal processing means for, when receiving from an outside request source a removal preparation request specifying a removal target resource existing in the communication device itself, detecting a path identifier and a communication device serving as a start point of each path passing through the removal target resource, and for each detected path, transmitting a path switching request specifying the detected path identifier of the path and the removal target resource to the communication device serving as the start point of the path;
routing processing means for, when receiving the path switching request specifying the path identifier and the removal target resource, computing a route of another path having a start point and an end point which are the same as those of the path identified by the path identifier and not passing through the removal target resource; and
path switching processing means for, after performing a setting process of the other path computed by the routing processing unit, performing a disconnecting process of the path identified by the path identifier.

15. A computer program product comprising computer implementable instructions for causing a programmable computer device to perform the method of claim 1 or 2 or to become configured as the communication device of any of claims 5 to 13.
